# EUROPEAN PATENT APPLICATION

(11) **EP 4 625 745 A1**
(43) Date of publication of application: **01.10.2025**
(21) Application number: 24165936.6
(22) Date of filing: 25.03.2024
(51) Int. Cl.: H02J 3/36, H02J 13/00

(54) **CONTROL AND PROTECTION SYSTEM AND METHOD FOR CALCULATING A DYNAMIC CAPACITY OF AN HVDC SYSTEM**

(71) Applicant: Hitachi Energy Germany AG, 68309 Mannheim (DE)
(72) Inventor: Schmitt, Susanne, 69115 Heidelberg (DE); Schoenleber, Kevin, 69198 Schriesheim (DE); Mitrentsis, Georgios, 70372 Stuttgart (DE); Juhlin, Robert, 69126 Heidelberg (DE)
(74) Representative: Epping - Hermann - Fischer

(57) **Abstract**

A control and protection system (9) for controlling and protecting components (7a, 7b, 7c, 7x) of an HVDC system (1), the control and protection system (9) being configured for receiving input data (15, 16), the input data comprising at least one of sensor data (15) for a component and forecast data (16) for operation of the HVDC system, calculating from the input data (15, 16), by using a physical model (8a, 8b, 8c, 8x) for each of the components (7a, 7b, 7c, 7x), an individual dynamic capacity (20a, 20b, 20c) for each of the components (7a, 7b, 7c, 7x), and calculating an overall dynamic capacity (11) of the HVDC system (1) by combining the individual dynamic capacities (20a, 20b, 20c).

## Description

The present disclosure relates to an HVDC (high-voltage direct current) control and protection system and a method for calculating a dynamic capacity of an HVDC system.

HVDC systems are becoming increasingly widespread worldwide due to the transition to renewable energy. For long distances, HVDC links have lower power losses than AC transmission lines. In addition to that, HVDC converter stations can be used for actively controlling active and reactive power in the grid and thereby contribute to better grid control. Since HVDC systems are costly for grid operators, it is important to optimally utilize their capacity.

Online estimation of dynamic capacity can be conducted to utilize overload capacity based on operational conditions, as disclosed in the publication by M. Langwasser, K. Schonleber, A. Wasserrab, M. Thiele and M. Liserre, "Online estimation of dynamic capacity of VSC-HVdc systems - power system use cases," ETG Congress 2021, 2021, pp. 704-709.

Embodiments of the disclosure relate to an improved control and protection system and an improved method for calculating a dynamic capacity of an HVDC system.

According to a first aspect, a control and protection system for controlling and protecting components of an HVDC system is configured for receiving input data, the input data comprising at least one of sensor data for a component and forecast data for operation of the HVDC system, calculating from the input data, by using a physical model for each of the components, an individual dynamic capacity for each of the components, and calculating an overall dynamic capacity of the HVDC system by combining the individual dynamic capacities.

Conventionally, a fixed capacity domain for an HVDC system is agreed on by a grid operator and a supplier. The grid operator guarantees that the HVDC system can be safely operated within this domain. However, the real capacity of individual components can vary over time, depending on real-time conditions, historic conditions and forecast conditions. Also the capacity domain for different components or different types of components can vary in different ways over time. By calculating an overall dynamic capacity from individual dynamic capacities, such variations can be taken into account and the full capability of the HVDC system can be used.

As an example, the components are selected from at least one of the types of a converter valve, a transformer and a DC cable. The components considered for the calculation may be of different types. It is also possible that at least some of the components are from the same type. The components may be located in or near a converter station. Also components from different converter stations can be considered in the calculation.

Each of the individual dynamic capacities and the overall dynamic capacity may be in the form of a capacity domain of active and reactive power. It is also possible that a dynamic capacity may be calculated as a limit for other parameters such as current flow in the system.

The overall dynamic capacity can be calculated as an intersection of the individual dynamic capacities. The overall capacity domain can thus be limited by different components in different regions of the capacity domain.

The control and protection system may be configured to enable setting any setpoint of operation of the HVDC system within the boundaries of the overall dynamic capacity. In particular, also setpoints may be set which are outside a pre-set fixed capacity domain defined by a grid operator, as long as the setpoints are within the boundaries of the overall dynamic capacity. Thereby, grid congestions can be resolved and/or stabilization of the grid can be provided. As an example, a setpoint may comprise setting current and/or power flow in the HVDC system.

Furthermore, the control and protection system may be configured to set alert levels for the components on the basis of the individual dynamic capacities and/or the overall dynamic capacity. As an example, an alert level may comprise setting a maximum allowed current or temperature for a component.

The control and protection system may be configured to provide the overall dynamic capacity to an operator control system. The operator control system may be remote from the control and protection system. As an example, the control and protection system or parts thereof may be located in one or more converter stations. The operator control system may be located in a different building and a remote location. The operator control system may comprise a human machine interface. In the operator control system, a setpoint for operation of the HVDC system may be set, by using the overall dynamic capacity provided by the control and protection system.

The input data may comprise sensor data of at least one of current flowing through one of the components, a temperature of one of the components and ambient temperature at the location of one of the components. As an example, a temperature may be a hot-spot temperature or top-oil temperature of a transformer, for example.

The sensor data may be live sensor data and/or historic sensor data. As an example, sensor data for a timespan reaching from a past time to live operation time may be provided. As an example, sensor data from the last hour or several last hours may be provided. As an example, a loading over the last hour may be provided.

The forecast data may comprise grid operation planning and/or a forecast of weather conditions. As an example, grid operating planning may include a forecast of active and/or reactive power demands. Ambient conditions may include a forecast of the temperature at the location of the components and/or a forecast of weather conditions relevant for renewable energy.

The calculated dynamic capacity may be valid for a future time. The calculated dynamic capacity may be calculated for one or more hours or days in advance. Thereby, operation planning is enabled. In particular, the dynamic capacity may be calculated for the time of the forecast data. It is also possible that the dynamic capacities are calculated to be valid instantaneously. This allows reacting to suddenly high transmission need or load changes, for example.

The control and protection system may be configured to repeat the calculation. As an example, the calculation may be automatically repeated or on demand, e.g. by an operator. The calculation may be repeated every few minutes, hourly or daily. New input data may be provided for each repetition. As an example, updated sensor data and/or updated forecast data may be provided.

According to a further aspect, a control system comprises a control and protection system and an operator control system. The control and protection system may have any functional and structural characteristics as disclosed in the foregoing. The control system and the control and protection system are configured to communicate with each other.

The control and protection system may be configured to provide the calculated overall capacity to the operator control system. The calculated overall capacity may be transmitted every time the calculation is updated. The operator control system may be configured to set a setpoint of operation within the boundaries of the overall dynamic capacity.

The operator control system may be configured to provide at least a part of the input data to the control and protection system. As an example, forecast data such as grid operation planning or weather forecast data may be provided by the operator control system.

According to a further aspect, a method for controlling and protecting components of an HVDC system comprises the steps of receiving input data, the input data comprising at least one of sensor data for a component and forecast data for operation of the HVDC system, calculating from the input data, by using a physical model for each of the components, an individual dynamic capacity for each of the components, and calculating an overall dynamic capacity of the HVDC system by combining the individual dynamic capacities. The method may carry out any steps and may comprise any functional and structural characteristics as disclosed in the foregoing for the control and protection system and the control system.

The method may be a computer-implemented method. The method may be carried out by the control and protection system and /or the control system as disclosed in the foregoing. However, the method may be also carried out by a different system.

The method steps may be conducted locally or remotely. One or more of the method steps may also be conducted within a cloud system.

The method may comprise the further step of setting a setpoint of operation of the HVDC system within the boundaries of the overall dynamic capacity. In particular, a setpoint may be set which is outside a pre-set fixed capacity domain defined by a grid operator, as long as the setpoints are within the boundaries of the overall dynamic capacity.

The method may comprise the further step of setting alert levels for the components on the basis of the individual dynamic capacities and/or the overall dynamic capacity.

As disclosed above in connection with the description of the control and protection system, the calculation may be repeated, either automatically or on demand. The calculation may be repeated at regular time intervals. The input data may be updated at least partially for each new calculation. The overall dynamic capacity may be valid instantaneously or for a future time.

The present disclosure comprises several aspects and embodiments. Every feature described with respect to one of the aspects and embodiments is also disclosed herein with respect to the other aspects and embodiments, even if the respective feature is not explicitly mentioned in this context.

Further features, refinements and expediencies become apparent from the following description of the exemplary embodiments in connection with the figures. In the figures, elements of the same structure and/or functionality may be referenced by the same reference signs. It is to be understood that the embodiments shown in the figures are illustrative representations and are not necessarily drawn to scale.
Figure 1 shows an HVDC system in a schematic diagram,
Figure 2 shows capacity domains and setpoints in a schematic diagram,
Figure 3 shows an embodiment of a control and protection system and method steps for calculating a dynamic capacity in a schematic diagram,
Figures 4A to 4C show individual capacity domains for different components of the HVDC system in a schematic diagram,
Figure 5A shows a combination of the individual capacity domains of Figs. 4A to 4C to an overall capacity domain,
Figure 5B shows the overall capacity domain as obtained in Fig. 5A,
Figure 6 shows an interaction of an HVDC control and protection system and a network control system in a schematic diagram.

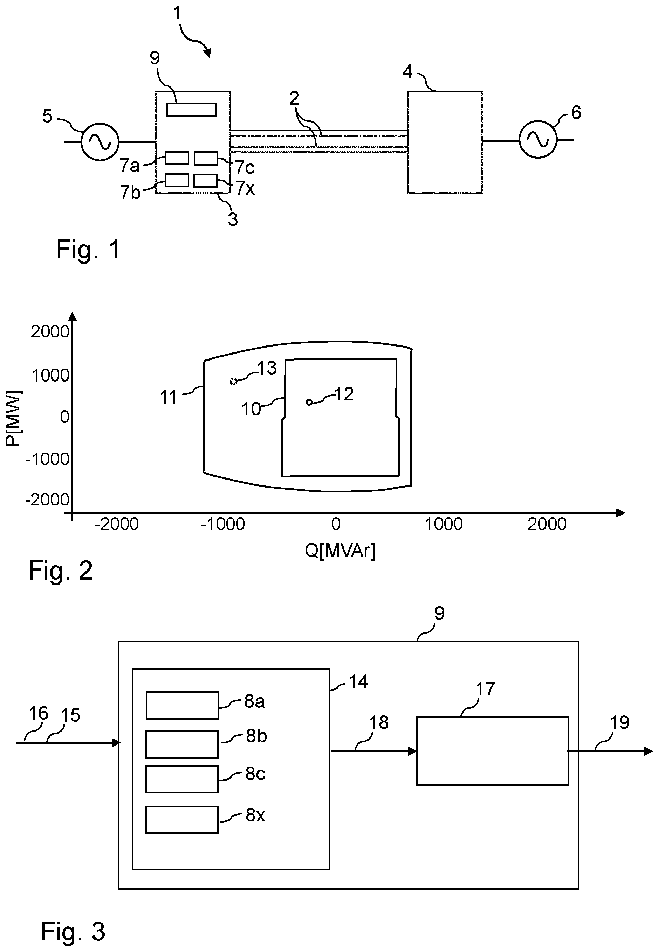

Figure 1 shows an HVDC system 1 comprising DC transmission lines 2, which can be used for long distance power transmission. At the end of the transmission lines 2 converter stations 3, 4 are located for converting AC current in AC grids 5, 6 to DC current or vice versa.

A converter station 3, 4 may function as a rectifier to covert AC current into DC current or as an inverter to convert DC current into AC current. The converter stations 3, 4 may be configured to be switched between a rectifier mode and an inverter mode to control flow of electric power in both directions. The HVDC system 1, and in particular the converter stations 3, 4 comprise several components, including converter valves 7a, transformers 7b and DC cables 7c. The DC cable 7 may connect components in the converter stations 3, 4. The components can be also at different locations than the converter station 3.

A control and protection system 9 controls and protects the HVDC system 1, in particular the components. The control and protection system 9 may comprise a computer and a software installed on the computer to control the HVDC system 1. The control and protection system 9 may be a local system and may comprise a processing device located in one of or each of the converter station 3, 4. It is also possible that the control and protection system 9 is a remote system and connected to the converter stations 3, 4 by a suitable network. It is also possible that the protection and control system 9 is integrated in a SCADA system.

The control and protection system 9 ensures that the HVDC system 1 and, in particular, the components are only operated within the boundaries of an allowed capacity domain.

Figure 2 shows capacity domains 10, 11 in a P/Q-Diagram, wherein P denotes the active power and Q denotes the reactive power. P is given in megawatts and Q is given in Megavolt-amperes reactive.

A capacity domain 10, 11 defines the boundaries for operating setpoints of active power P and reactive power Q. Usually, a grid operator gives guarantees, as long as the HVDC system 1 is operated within the boundaries of the capacity domain 10, 11. The guarantees are, e.g., a performance guarantee, dynamic performance, harmonics, guaranteed lifetime, maintenance periods, etc. The capacity domain 10, 11 is usually given for a maximum operating ambient temperature, e.g., 40 °C in Europe.

Conventionally, the P/Q capacity domain is a fixed capacity domain 10, which is agreed on by a grid operator and a supplier. The grid operator guarantees that the HVDC system 1 can be safely operated within this domain 10. The fixed capacity domain 10 usually has the shape of a rectangle in the P/Q plane, which may differ between the power flow direction, i.e., between an inverter or rectifier mode.

The fixed capacity domain 10 does not change over time. The control and protection system 9 always respect this fixed capacity domain 10 so that a setpoint 12 is always within the boundaries of this domain 10. An operation outside the fixed capacity domain 10 is not foreseen, as it may lead to equipment failures or accelerated equipment aging.

SCADA (supervisory control and data acquisition) systems utilize the guaranteed capacity domain 10 as fixed boundaries for variables. The SCADA system may be a network system. Reports regarding the inherent overload of an HVDC system 1 can be generated and shared with customers upon request, e.g. in tenders.

The control and protection system 9 of the present invention, however, calculates a dynamic capacity domain 11. The dynamic capacity domain 11 takes into account that the actual inherent capacity of the HVDC system 1 varies with changing operating conditions. As an example, low ambient temperature, reduced reactive power needs or favorable AC voltage conditions may be operational conditions where overload capabilities can be used. Such conditions allow setting setpoints outside a fixed capacity domain 10. The dynamic capacity domain 11 varies over time. As an example, the dynamic capacity may depend on the conditions, such as ambient temperature and voltage at the point of common coupling (PCC) after a specific time of overload, e.g. one hour overload.

Depending on the conditions of past, present and expected operation, the dynamic capacity domain 11 can be significantly larger than the fixed capacity domain 10. The fixed capacity domain 10 is fully enclosed by the dynamic capacity domain 11. The HVDC system 1 can then be operated at a specific time or time range, for which the dynamic capacity domain 11 is valid, at every setpoint within the dynamic capacity domain 11, e.g., also at a setpoint 13 outside the fixed capacity domain 10. In particular, the HVDC system 1 may be operated with higher currents and/or voltages and, subsequently, at higher values for active power P and reactive power Q. In other words, by a dynamic capacity domain 11, unused potential of the HVDC system 1 can be utilized.

Figure 3 shows an embodiment of an HVDC control and protection system 9. The HVDC control and protection system 9, in particular the software package, comprises a dynamic capacity calculation module 14, which calculates individual dynamic capacities for each of several components. The calculation is based on a physical model 8a-8x of each of the components stored in the HVDC control and protection system 9. The physical model may be a digital twin or another model of the component's status and behavior.

A first component may be a converter valve 7a, a second component may be a transformer 7b, a third component may be a DC cable 7c, for example. The calculation can be extended to further components 7x, as shown in Fig. 1.

The physical model receives as a first input sensor data 15 and as a second input forecast data 16. The input can be provided by the same input channel or different input channels. Sensor data 15 may be live sensor data. It is also possible that the sensor data 15 comprises historic sensor data. The sensor data 15 may also comprise estimated data such as an estimated temperature. As an example, in case of a transformer, the estimated temperature may be a hot-spot temperature.

The sensor data 15 and forecast data 16 may comprise data from the point of common coupling (PCC), i.e. the location where the HVDC system connects to the AC grid or network. This may be the location of one of the converter stations 3, 4 and/or transformers and filters at the converter stations 3, 4. The sensor data 15 may comprise ambient data such as ambient temperature. The sensor data 15 may comprise a voltage level at the PCC, in particular an AC grid voltage. The sensor data 15 may also comprise data on loading, active and/or reactive power operation points.

The forecast data 16 may comprise a forecast of the data measured by the sensors. As an example, the forecast data 16 may comprise ambient temperature and/or voltage at PCC. The forecast data 16 may comprise other data, such as a forecast of an overload duration.

Both sensor data 15 and forecast data 16 vary over time. The data 15, 16 may be provided continuously at regular intervals. As an example, data of the first input 15 may be provided every 10 minutes. Data of the second input 16 may be provided every hour. It is also possible that the time intervals for some of the data types are different.

For each of the components, an individual dynamic capacity domain is calculated from the first input 16 and the second input 16 by using the individual physical models 8a-8x of the components. From the individual dynamic capacity domains, an overall dynamic capacity domain for the HVDC system 1 is calculated, which is at least a part of the output 18 of the dynamic capacity calculation module 14. The individual components can have dynamic limits with different physical quantities. As an example, currents depending on power angles, active and/or reactive power.

The calculated overall dynamic capacity domain is provided to the setpoint calculation module 17. Also the individual capacity domains 18 can be provided to the setpoint calculation module 17. Additionally, the overall dynamic capacity domain can be provided for system operation, i.e. a grid control, so that any P/Q setpoint within the domain can be selected manually or automatically.

The setpoint calculation module 17 then calculates from the overall setpoints individual setpoints for the components 7a-7x such that the overall setpoint is within the boundaries of the overall dynamic capacity domain. The individual setpoints are the output 19 of the calculation module 17 and the entire control and protection system 9. As an example, individual setpoints may comprise setting limits of voltage and current for individual components. Furthermore, a setpoint may comprise setting operating voltages and currents for individual components. The control and protections system 9 may set alert levels based on the calculated capacity domains.

The control and protections system 9 may transmit the overall dynamic capacity to an operator control system, wherein a setpoint is set in the operator control system and the setpoint and/or limits for the components are than transmitted back to the control and protection system 9.

The dynamic capacity can be used, e.g., for transmitting more power for a certain time duration than would be possible within a fixed capacity domain, for congestion management, for voltage control, etc.

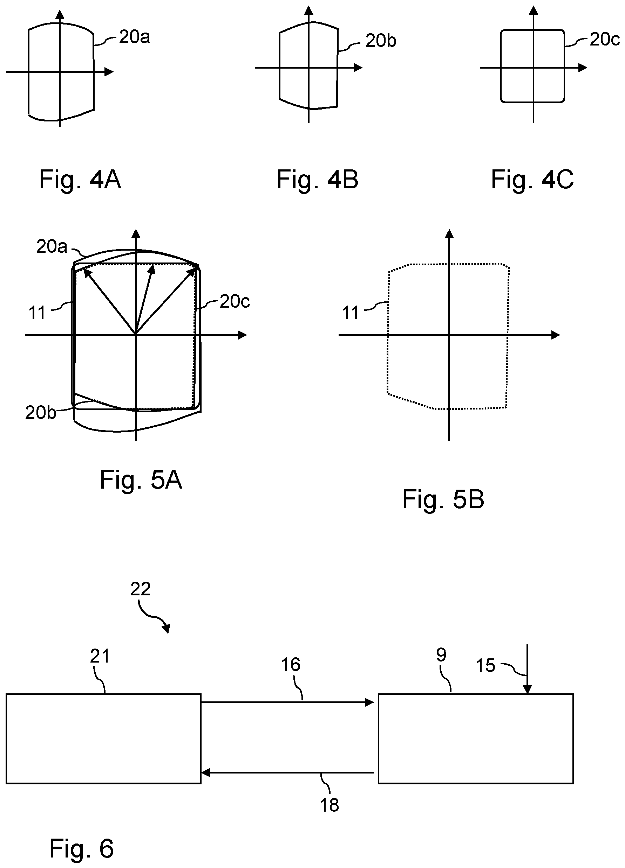

Figures 4A to 4C show individual capacity domains for different components of an HVDC system 1 in schematic diagrams. The individual capacity domains can be calculated by the simulation models 8a-8x for the different components 7a-7x in the control and protection system 9 as shown in Figs. 1 and 3, for example.

The individual capacity domains 20a, 20b, 20c may be calculated for a converter valve 7a, a transformer 7b and a DC cable 7c, for example. The individual capacity domains 20a, 20b, 20c have different boundaries due to the differences for the components 7a, 7b, 7c.

Furthermore, the individual capacity domains 20a, 20b, 20c vary over time, depending on historic and/or live ambient conditions or operating conditions of the components 7a, 7b, 7c.

As an example, the size and shapes of each of the individual capacity domains 20a-20c depends on ambient conditions such as ambient temperature and operating conditions such as voltage at the common point of coupling and active and reactive power demand. In particular, live conditions, historic conditions and forecasted conditions may determine the individual capacity domains 20a, 20b, 20c.

As an example, the operating conditions over the last few hours may be relevant for determining the capacity domains 20a-20c. Furthermore, forecasted data for grid operation planning may be an input into the calculation. The forecasted data may include ambient conditions and operating conditions such as a forecast of active and reactive power demands.

The calculation may be repeated with at least partially updated data at pre-defined intervals, e.g. every 5 minutes.

Figure 5A shows combining the individual dynamic capacity domains 20a-20c of Figs. 4A to 4C to an overall dynamic capacity domain 11.

The overall dynamic capacity domain 11 is obtained from the common intersection area of all individual capacity domains 20a-20c. In other words, every setpoint within the boundaries of the overall capacity domain 11 is also a setpoint within each of the boundaries of the individual capacity domains 20a-20c. The overall capacity domain 11 might be thus limited by different components in different regions of the capacity domain. The arrows show example power angels where different individual capacity domains 20a-20c are the limiting ones.

Figure 6 shows a control system 22 comprising an operator control system 21 communicating with a control and protection system 9 for dynamic capacity calculation. The control and protection system 9 may be as shown in Fig. 3, for example.

The overall HVDC system 1 may be controlled by the operator control system 21, which may be a SCADA system, for example. The operator control system 21 may have a human-machine-interface, which allows monitoring and/or actively controlling the HVDC system 1 by a grid operator. The operator control system 21 may be a local system, attributed to one or more converter stations 3, 4 or may be a remote system. The operator control system 21 may be also used for controlling several converter stations 3, 4 and/or several HVDC systems 1. The operator control system 21 may comprise a control software running in a grid operator control room, for example. The operator control system 21 may be a network control system.

The operator control system 21 may sent the input data, e.g. forecast data 16 to the control and protection system 9. As an example, operation planning data including a required capacity for a specific time, forecasting data, such as weather data and projected voltage profiles may be provided by the operator control system 21. As an example, the data may be sent at regular intervals, such as every 15 minutes.

The control and protection system 9 may further input data, e.g. sensor data 15, from local sensors. As an example, the first input data 15 may include at least one of ambient temperature and voltage at the OCC.

The control and protection system 9 may run locally in a converter station 3, 4. The control and protection system 9 may calculate the individual dynamic capacity domains 20a-20c and the overall dynamic capacity domain 11. The dynamic capacity domain can be in the form of a P/Q diagram. Alternatively, the dynamic capacity domain may be in the form of circuit current limitation, for example. It is also possible that the operator control system 21 calculates the overall dynamic capacity domain 11.

The control and protection system 9 transmits the output 18, e.g. the calculated overall dynamic capacity domain 11 and/or the individual capacity domains 20a-20c to the operator control system 21.

The operator control system 21 uses the dynamic capacity domains 11, 20a-20c for its grid control algorithms. By setting setpoints which are outside a fixed capacity domain, the use of the HVDC systems capabilities can be optimized.

As an example, more options are available for the grid operator to resolve grid congestions and stabilize the grid. As an example, more power can be transmitted than allowed within the boundaries of a fixed, pre-set capacity domain. Thereby, a curtailment by redispatching renewable energies can be avoided, leading to a more cost efficient and sustainable grid operation.

### Reference Signs

- 1: HVDC system
- 2: DC transmission line
- 3: converter station
- 4: converter station
- 5: AC grid
- 6: AC grid
- 7a: converter valve
- 7b: transformer
- 7c: DC cable
- 7x: further component
- 8a: converter valve model
- 8b: transformer model
- 8c: DC cable model
- 8x: further component model
- 9: control and protection system
- 10: fixed capacity domain
- 11: dynamic capacity domain
- 12: setpoint
- 13: setpoint
- 14: dynamic capacity calculation module
- 15: sensor data
- 16: forecast data
- 17: setpoint calculation module
- 18: output of dynamic capacity calculation module)
- 19: output of control and protection system)
- 20a: individual capacity domain
- 20b: individual capacity domain
- 20c: individual capacity domain
- 21: operator control system
- 22: control system
- P: active power
- Q: reactive power

## Claims

1. A control and protection system (9) for controlling and protecting components (7a, 7b, 7c, 7x) of an HVDC system (1), the control and protection system (9) being configured for receiving input data (15, 16), the input data comprising at least one of sensor data (15) for a component and forecast data (16) for operation of the HVDC system,
calculating from the input data (15, 16), by using a physical model (8a, 8b, 8c, 8x) for each of the components (7a, 7b, 7c, 7x), an individual dynamic capacity (20a, 20b, 20c) for each of the components (7a, 7b, 7c, 7x),
and calculating an overall dynamic capacity (11) of the HVDC system (1) by combining the individual dynamic capacities (20a, 20b, 20c).

2. The control and protection system claim 1,
wherein the components (7a, 7b, 7c, 7x) are selected from at least one of the types of a converter valve, a transformer and a DC cable.

3. The control and protection system of any of the preceding claims, wherein the individual dynamic capacities (8a, 8b, 8c, 8x) and the overall dynamic capacity (11) are in the form of a capacity domain of active and reactive power.

4. The control and protection system of any of the preceding claims, wherein the overall dynamic capacity (11) is an intersection of the individual dynamic capacities (20a, 20b, 20c).

5. The control and protection system of any of the preceding claims, being configured to enable setting any setpoint of operation of the HVDC system (1) within the boundaries of the overall dynamic capacity (11).

6. The control and protection system of any of the preceding claims, wherein the sensor data (15) comprises at least one of current flowing through one of the components (7a, 7b, 7c, 7x), a temperature of one of the components (7a, 7b, 7c, 7x) and ambient temperature at the location of one of the components (7a, 7b, 7c, 7x).

7. The control and protection system of any of the preceding claims, wherein the sensor data (15) comprises live sensor data and/or historic sensor data.

8. The control and protection system of any of the preceding claims, wherein the forecast data (16) comprises grid operation planning and/or a forecast of weather conditions.

9. The control and protection system of any of the preceding claims, being configured to repeat the calculation at different times with updated input data (15, 16).

10. The control and protection system of any of the preceding claims, wherein the dynamic overall capacity (11) is calculated to be valid at a future time.

11. A control system (22) comprising the control and protection system (9) and an operator control system (21) of any of the preceding claims, wherein the control and protection system (9) is configured to provide the calculated overall capacity (11) to the operator control system (21).

12. The control system (22) of claim 11,
wherein the operator control system (21) is configured to set a setpoint of operation within the boundaries of the calculated overall capacity (11).

13. The control system (22) of any of claims 11 and 12, wherein the operator control system (21) is configured to provide at least a part of the input data (15, 16) to the control and protection system (9).

14. A method for controlling and protecting components of an HVDC system (1), the method comprising the steps of receiving input data (15, 16), the input data comprising at least one of sensor data (15) for a component and forecast data (16) for operation of the HVDC system,
calculating from the input data (15, 16), by using a physical model (8a, 8b, 8c, 8x) for each of the components (7a, 7b, 7c, 7x), an individual dynamic capacity (20a, 20b, 20c) for each of the components (7a, 7b, 7c, 7x),
and calculating an overall dynamic capacity (11) of the HVDC system (1) by combining the individual dynamic capacities (20a, 20b, 20c).

15. The method of claim 14,
comprising the further step of setting a setpoint (12, 13) of operation for the HVDC system (1), the setpoint (12, 13) being within the overall dynamic capacity (11).
